# EUROPÄISCHE PATENTANMELDUNG

(11) **EP 0 964 556 A2**
(43) Veröffentlichungstag der Anmeldung: **15.12.1999**
(21) Anmeldenummer: 99111244.2
(22) Anmeldetag: 09.06.1999
(51) Int. Cl.: H04L 25/06

(54) **Fehlerverarbeitungsschaltung für eine Empfangsstelle eines Datenübertragungssystems**

(30) Priorität: 12.06.1998 DE 19826388
(71) Anmelder: STMicroelectronics GmbH, 85630 Grasbrunn (DE)
(72) Erfinder: Heinrich, Peter, 83024 Rosenheim (DE)
(74) Vertreter: Hirsch, Peter

(57) **Zusammenfassung**

Fehlerverarbeitungsschaltung für eine Empfangsstelle eines Systems zur Übertragung binärer Daten in Form von Impulsfolgen, wobei das System eine Anzahl Empfangsstellen aufweist, die über einen Doppelleitungsbus mit einer ersten Leitung (A) und einer zweiten Leitung (B) verbunden sind; ein erster Logikwert der binären Daten durch einen hohen Potentialwert auf der ersten Leitung (A) und einen niedrigen Potentialwert auf der zweiten Leitung (B) und ein zweiter Logikwert der binären Daten durch einen niedrigen Potentialwert auf der ersten Leitung (A) und einen hohen Potentialwert auf der zweiten Leitung (B) dargestellt wird; innerhalb einer jeden Impulsfolge nicht mehr als eine vorbestimmte Anzahl gleichartiger Datenbits aufeinanderfolgen dürfen; und die Empfangsstelle aufweist: einen Datenausgang (Rx), einen Dekoder (CA, CB, CD) mit drei Dekoderausgängen (ACA, ACB, ACD) von denen ein beiden Leitungen (A, B) zugeordneter erster Dekoderausgang ein von der Differenz zwischen den Potentialwerten beider Leitungen (A, B) abhängendes erstes Dekoderausgangssignal liefen, ein der ersten Leitung (A) zugeordneter zweiter Dekoderausgang ein von der Differenz zwischen dem Potentialwert der ersten Leitung (A) und einem ersten Mittenpotentialwert abhängendes zweites Dekoderausgangssignal liefen und ein der zweiten Leitung (B) zugeordneter dritter Dekoderausgang ein von der Differenz zwischen dem Potentialwert der zweiten Leitung (B) und einem zweiten Mittenpotentialwert abhängendes drittes Dekoderausgangssignal liefert, wobei der erste Mittenpotentialwert und der zweite Mittenpotentialwert je zwischen dem hohen Potentialwert und dem niedrigen Potentialwert liegen und im fehlerfreien Fall (I) und beim Auftreten von Leitungsfehlern einer ersten Fehlergruppe (II, V) mit einem Leitungsfehler auf einer der beiden Leitungen (A, B) mindestens der erste Dekoderausgang (ACD) und beim Auftreten einer zweiten Fehlergruppe (III, IV) mit einem Leitungsfehler auf einer der beiden Leitungen (A, B) nur noch der der fehlerfreien anderen Leitung (A, B) zugeordnete Dekoderausgang (ACA, ACB) einwandfrei dekodierte Daten liefert; eine Leitungszustandsdetektorschaltung (L1-L4, Z1, Z2), mittels welcher in Abhängigkeit von den Dekoderausgangssignalen fehlerfreie Leitungszustände und Leitungsfehler der ersten Leitung (A) und Leitungsfehler der zweiten Leitung (B) detektierbar und vom jeweiligen Detektionsergebnis abhängende Umschaltsteuersignale lieferbar sind; und einen steuerbaren Umschalter (MUX), mittels welchem der Datenausgang (Rx) bei der Detektion von Leitungszuständen, bei welchen nur der zweite (ACA) oder der dritte (ACB) Dekoderausgang einwandfrei dekodierte Daten liefert, mit diesem Dekoderausgang (ACA, ACB) und ansonsten mit dem ersten Dekoderausgang (ACD) verbunden wird.

## Beschreibung

Die Erfindung betrifft eine Fehlerverarbeitungsschaltung für eine Empfangsstelle eines Systems zur Übertragung binärer Daten in Form von Impulsfolgen. Das System weist eine Anzahl Empfangsstellen auf, die über einen Doppelleitungsbus mit einer ersten Leitung und einer zweiten Leitung verbunden sind. Die Empfangsstellen können Teile von Netzknoten des Datenübertragungssystems sein, die je sowohl sende- als auch empfangsfähig sind. Aus Redundanzzwecken werden die binären Daten des Datenübertragungssystems gleichzeitig sowohl über die erste Leitung als auch über die zweite Leitung übertragen. Dabei wird ein erster Logikwert der binären Daten durch einen hohen Potentialwert auf der ersten Leitung und einen niedrigen Potentialwert auf der zweiten Leitung und wird ein zweiter Logikwert der binären Daten durch einen niedrigen Potentialwert auf der ersten Leitung und einen hohen Potentialwert auf der zweiten Leitung dargestellt. Dem Protokoll des Datenübertragungssystems entsprechend dürfen innerhalb einer jeden Impulsfolge oder eines jeden Datenrahmens nicht mehr als eine vorbestimmte Anzahl gleichartiger Datenbits aufeinanderfolgen.

Bei einem derartigen Datenübertragungssystem kann es sich um ein CAN-System handeln. Der Begriff CAN steht für Controller-Area Network. Nähere Angaben hierzu finden sich in dem Buch "Controller-Area Network: CAN" von Konrad Etschberger, Carl Hanser Verlag 1994, ISBN-Nr. 3-446-17596-2. Interessant im vorliegenden Zusammenhang sind insbesondere die Abschnitte-Protokolleigenschaften auf den Seiten 25 und 26 und Daten/Rahmen-Format auf den Seiten 37 bis 43.

Einsatz finden derartige CAN-Systeme beispielsweise im Kraftfahrzeugbereich.

Für das CAN-System gibt es eine gemeinsame Versorgungsspannungsquelle, z.B. in Form einer Kraftfahrzeugbatterie, die beispielsweise eine Batteriespannung von 12 V liefert. Außerdem besitzt jeder Netzknoten eine netzknoteneigene, individuelle Betriebsspannungsquelle, die aus der Versorgungsspannung eine den jeweiligen Netzknoten versorgende geregelte Betriebsspannung erzeugt. Jede Betriebsspannungsquelle liefert an einem ersten Anschluß ein Betriebspotential, beispielsweise in Höhe von 5 V, und an einem zweiten Anschluß ein Bezugspotential, beispielsweise Massepotential oder 0 V.

Der Sendeteil eines Netzknotens weist zwei Widerstände und zwei steuerbare elektronische Schalter auf, die mit den beiden Leitungen des Doppelleitungsbus verbunden sind. Eine dieser Leitungen ist über einen ersten dieser Widerstände mit dem Betriebspotential (5 V) und über einen ersten dieser Schalter mit dem Bezugspotential (0 V) verbunden. Die andere Leitung ist über den zweiten Widerstand mit dem Bezugspotential (0 V) und über den zweiten Schalter mit dem Betriebspotential (5 V) verbunden. Zum Senden von digitalen Nachrichten werden die beiden Schalter synchron entweder in einen leitenden Zustand oder in einen nichtleitenden Zustand gesteuert. Bei nichtleitend gesteuerten Schaltern liegt an der einen Leitung das Betriebspotential und an der anderen Leitung das Bezugspotential. Diesem Schalterzustand wird beispielsweise der Logikwert "1" zugeordnet. Bei leitend gesteuerten Schaltern liegt an der einen Leitung das Bezugspotential und an der anderen Leitung das Betriebspotential. Diesem Schalterzustand wird dann der Logikwert "0" zugeordnet.

Da die Sendeteile aller sendefähigen Netzknoten bezüglich der beiden Leitungen parallel geschaltet sind, kann das dem Logikwert "0" zugeordnete Potentialverhältnis auf den beiden Leitungen durch Schließen der beiden Schalter eines jeden der sendefähigen Netzknoten erzeugt werden. Andererseits kann der nichtleitende Zustand der beiden Schalter eines jeden Netzknotens durch den leitenden Zustand der beiden Schalter eines anderen Netzknotens überspielt werden. Daher nennt man den Logikwert, der einem geschlossenen Schalterpaar zugeordnet ist (Logikwert "0"), dominant und den Logikwert, der einem nichtleitenden Schalterpaar zugeordnet ist (Logikwert "1"), rezessiv.

Der Empfangsteil eines jeden empfangsfähigen Netzknotens weist einen Komparator auf, der die jeweiligen Potentiale auf den beiden Leitungen miteinander vergleicht. Beim Empfang eines rezessiven Bits (Logikwert "1") entsteht am Ausgang des Komparators beispielsweise ein positives Potential, dem der Logikwert "1" zugeordnet wird. Beim Empfang eines dominanten Bits (Logikwert "0") steht am Ausgang des Komparators ein dem Bezugspotential entsprechendes Potential, dem dann der Logikwert "0" zugeordnet wird. Der Komparator bildet somit einen Decoder für die dem jeweils gesendeten Bit entsprechenden Potentialverhältnisse auf den beiden Leitungen.

Die beiden Leitungen werden aus Redundanzgründen neben der Systemmasse verwendet. Die dem Potentialwert des jeweils gesendeten Bits entsprechende Nachrichteninformation wird auf diese Weise sowohl über die eine Leitung als auch über die andere Leitung übertragen. Fällt eine der beiden Leitungen aus, kann der weitere Sendebetrieb auf die nicht ausgefallene Leitung beschränkt werden. Zur Erfassung von Leitungsausfällen sind zwei weitere Komparatoren vorgesehen, von denen einer das Potential der einen Leitung und der andere das Potential der anderen Leitung mit einem zwischen dem Betriebspotential und dem Bezugspotential liegenden Mittenpotential vergleicht.

Es können verschiedene Leitungsausfälle oder Leitungsfehler vorkommen, beispielsweise in Form von Kurzschlüssen zwischen den beiden Leitungen, Kurzschlüssen zur Systemmasse, Kurzschlüssen zur Betriebspotentialquelle, Kurzschlüssen zur Versorgungsspannungsquelle oder in Form von offenen Leitungen. Es gibt Leitungsfehler, die ein sicheres Decodieren der gesendeten Nachrichten nicht behindern. Es gibt andere Leitungsfehler, gegen die bestimmte Maßnahmen erforderlich sind, um weiterhin eine korrekte Dekodierung zu ermöglichen. Näheres hierzu findet man in der DE 195 23 031 A1.

Bei einem CAN-Netz werden die Nachrichten in Form von zeitlich voneinander beabstandeten Impulsfolgen oder Rahmen übertragen. Das übliche CAN-Protokoll sieht vor, daß zwischen den einzelnen Rahmen ein zeitlicher Mindestabstand vorhanden ist und daß innerhalb eines Rahmens nicht mehr als 11 rezessive oder dominante Bits aufeinanderfolgen dürfen.

Aus der DE 196 23 031 A ist es bekannt, für einen empfangsseitigen Decoder die bereits erwähnten drei Komparatoren zu verwenden, deren Ausgangssignale mit Hilfe einer Fehlererkennungsschaltung auf das Vorliegen bestimmter Leitungsfehler hin zu untersuchen und vom Ergebnis dieser Untersuchung abhängig zu machen, der Ausgang eines welchen der drei Komparatoren über einen von der Fehlererkennungsschaltung gesteuerten Multiplexer mit einem Datenausgang der Empfangsstelle zu verbinden ist. Liefen der die Potentialwerte der beiden Leitungen vergleichende Komparator für eine längere Zeitdauer, als sie nach dem CAN-Protokoll erlaubt ist, den Potentialwert des dominanten Logikwertes "0", wird davon ausgegangen, daß entweder die beiden Leitungen miteinander kurzgeschlossen sind oder die erste Leitung einen Kurzschluß nach Systeminasse hin aufweist, und wird als Datenausgang derjenige Komparator verwendet, welcher das Potential der zweiten Leitung mit einem Mittenpotentialwert vergleicht. Das heißt, sobald der die Potentialwerte der beiden Leitungen vergleichende Komparator über die vom CAN-Protokoll erlaubte Zeitdauer hinaus permanent den dominanten Logikwert "0" aufweist, wird für die Decodierung der empfangenen Daten auf die Potentialwechsel auf der zweiten Leitung zurückgegriffen.

Nun gibt es aber Leitungsfehler, die an einem permanenten dominanten Logikwert "0" am Ausgang des die Potentialwerte der beiden Leitungen vergleichenden Komparators erkennbar sind, bei denen aber auf der zweiten Leitung keine Potentialwechsel mehr stattfinden. Ein solcher Fall ist dann gegeben, wenn die zweite Leitung einen Kurzschluß zur netzknoteneigenen Betriebsspannungsquelle (5 V) hin aufweist. Auch bei einem solchen Leitungsfehler wird im Fall der bekannten Schaltungsanordnung auf den Ausgang des die zweite Leitung auf Potentialwechsel beobachtenden Komparators zurückgegriffen. Und da dort keine Potentialwechsel mehr auftreten, versagt die Datendecodierung.

Aufgabe der Erfindung ist es, hier Abhilfe zu schaffen und auch beim Auftreten derartiger Störungen eine einwandfreie Datendecodierung aufrechtzuerhalten.

Dies gelingt mit einer Fehlerverarbeitungsschaltung der im Patentanspruch 1 angegebenen Art, die gemäß den Ansprüchen 2 bis 7 weitergebildet werden kann.

Gemäß Anspruch 8 macht die Erfindung ein Datenübertragungssystem verfügbar, dessen Empfangsstellen mit einer Fehlerverarbeitungsschaltung der erfindungsgemäßen Art ausgestattet sind, so daß das gesamte Datenübertragungssystem auch gegen den genannten Fehler gesichert ist. Gemäß Anspruch 9 kann ein solches Datenübertragungssystem ein CAN-System sein.

Mit der Erfindung verfügbar gemacht wird eine Fehlerverarbeitungsschaltung für eine Empfangsstelle eines Systems zur Übertragung binärer Daten in Form von Impulsfolgen, wobeidas System eine Anzahl Empfangsstellen aufweist, die über einen Doppelleitungsbus mit einer ersten Leitung und einer zweiten Leitung verbunden sind; ein erster Logikwert der binären Daten durch einen hohen Potentialwert auf der ersten Leitung und einen niedrigen Potentialwert auf der zweiten Leitung und ein zweiter Logikwert der binären Daten durch einen niedrigen Potentialwert auf der ersten Leitung und einen hohen Potentialwert auf der zweiten Leitung dargestellt wird; innerhalb einer jeden Impulsfolge nicht mehr als eine vorbestimmte Anzahl gleichartiger Datenbits aufeinanderfolgen dürfen; und die Empfangsstelle aufweist: einen Datenausgang, einen Dekoder mit drei Dekoderausgängen, von denen ein beiden Leitungen zugeordneter erster Dekoderausgang ein von der Differenz zwischen den Potentialwerten beider Leitungen abhängendes erstes Dekoderausgangssignal liefen, ein der ersten Leitung zugeordneter zweiter Dekoderausgang ein von der Differenz zwischen dem Potentialwert der ersten Leitung und einem ersten Mittenpotentialwert abhängendes zweites Dekoderausgangssignal liefen und ein der zweiten Leitung zugeordneter dritter Dekoderausgang ein von der Differenz zwischen dem Potentialwen der zweiten Leitung und einem zweiten Mittenpotentialwert abhängendes drittes Dekoderausgangssignal liefert, wobei der erste Mittenpotentialwert und der zweite Mittenpotentialwert je zwischen dem hohen Potentialwen und dem niedrigen Potentialwen liegen und im fehlerfreien Fall und beim Auftreten von Leitungsfehlem einer ersten Fehlergruppe mit einem Leitungsfehler auf einer der beiden Leitungen mindestens der erste Dekoderausgang und beim Auftreten einer zweiten Fehlergruppe mit einem Leitungsfehler auf einer der beiden Leitungen nur noch der der fehlerfreien anderen Leitung zugeordnete Dekoderausgang einwandfrei dekodierte Daten liefen; eine Leitungszustandsdetektorschaltung, mittels welcher in Abhängigkeit von den Dekoderausgangssignalen fehlerfreie Leitungszustände und Leitungsfehler der ersten Leitung und Leitungsfehler der zweiten Leitung detektierbar und vom jeweiligen Detektionsergebnis abhängende Umschaltsteuersignale lieferbar sind; und einen steuerbaren Umschalter, mittels welchem der Datenausgang bei der Detektion von Leitungszuständen, bei welchen nur der zweite oder der dritte Dekoderausgang einwandfrei dekodierte Daten liefen, mit diesem Dekoderausgang und ansonsten mit dem ersten Dekoderausgang verbunden wird.

Bei der erfindungsgemäßen Fehlerverarbeitungsschaltung wird also nicht nur beobachtet, ob der Decoder im Zusammenhang mit dem Vergleich der Potentialwerte der beiden Leitungen permanent den dominanten Logikwert "0" liefert und in diesem Fall auf die Auswertung nur noch der Potentialwerte der zweiten Leitung umgeschaltet, sondern es werden in die Fehlerbetrachtung und Fehlerverarbeitung immer die Leitungszustände beider Leitungen hinsichtlich noch existierender Potentialwechsel einbezogen. Dies gibt die Möglichkeit, bei jedem Leitungsfehler, bei welchem ein Vergleich der Potentialwerte der beiden Leitungen eine Datendecodierung nicht mehr erlaubt, bei der Datendecodierung wirklich auf diejenige der beiden Leitungen zurückzugreifen, welche noch Potentialwechsel aufweist.

Bei dem genannten Leitungsfehler, bei welchem die zweite Leitung mit der Betriebsspannung des betrachteten Netzknotens kurzgeschlossen ist und bei welchem die bekannte Fehlerverarbeitungsschaltung eine Datendecodierung nicht mehr erlaubt, weil sie bei der Datendecodierung eben auf diese fehlerhafte Leitung umschaltet, wird im erfindungsgemäßen Fall für die Datendecodierung auf die erste Leitung umgeschaltet, welche bei diesem Leitungsfehler noch Potentialwechsel aufweist.

Die Leitungszustandsdetektorschaltung kann aufweisen: eine das erste Dekoderausgangssignal und das zweite Dekoderausgangssignal verknüpfende, ein erstes Logiksignal liefernde erste Logikschaltung; eine das erste Dekoderausgangssignal und das dritte Dekoderausgangssignal verknüpfende, ein zweites Logiksignal liefernde zweite Logikschaltung; eine das erste Logiksignal messende erste Zeitmeßeinrichtung und eine das zweite Logiksignal messende zweite Zeitmeßeinrichtung, mittels welchen eine zeitliche Messung von Logiksignalwerten des ersten bzw. zweiten Logiksignals, die einen Leitungsfehler bedeuten können, durchgeführt und ein erstes bzw. zweites Leitungsfehlersignal dann erzeugt wird, wenn ein solcher Logiksignalwert länger als eine der vorbestimmten Anzahl gleicher Datenbits entsprechende Zeitdauer ab seinem Auftreten andauert; und eine die beiden Leitungsfehlersignale verknüpfende dritte Logikschaltung, welche die beiden Leitungsfehlersignale zu dem Umschaltsteuersignal verknüpft.

Die beiden Zeitmeßeinrichtungen geben die Möglichkeit, Potentialwertzustände auf den beiden Leitungen, die als Leitungsfehler interpretiert würden, obwohl sie innerhalb des Protokolls des Datenübertragungssystems bei fehlerfreier Leitung vorkommen können, zeitlich so lange zu maskieren, bis nach dem Protokoll feststeht, daß es sich wirklich um Leitungsfehler handeln muß.

Die erste bis dritte Logikschaltung können je mit einem NOR-Glied aufgebaut sein und bei der vierten Logikschaltung kann es sich um ein UND-Glied mit einem invertierenden Eingang und einem nichtinvertierenden Eingang handeln. Die beiden Zeitmeßeinrichtungen können je durch einen Zähler gebildet sein, der ihm über einen Zähltakteingang zugeführte Zähltaktimpulse zählt, solange er über einen Zählfreigabe-/Rücksetzeingang zum Zählen freigegeben ist. Ein erster Logikwert, beispielsweise "1", gibt den Zähler zum Zählen frei, und ein zweiter Logikwert, in diesem Beispiel "0", setzt den Zähler in einen Anfangszählzustand, vorzugsweise Zählstand 0, zurück. Potentialwertmuster auf den beiden Leitungen, die bei Leitungsfehlern auftreten können, geben das Zählen des einen und/oder des anderen Zählers frei und führen dann, wenn sie länger dauern als die vom Protokoll des Datenübertragungssystems zugelassene Zeitdauer, am Ausgang des jeweiligen Zählers zu einem Potentialwechsel, der von der dritten Logikschaltung mit dem dritten NOR-Glied und dem UND-Glied ausgewertet wird.

In an sich bekannter Weise kann der Decoder mit drei Komparatoren aufgebaut sein, von denen ein erster die Potentialwerte der beiden Leitungen miteinander vergleicht und die beiden anderen den Potentialwert der ersten Leitung beziehungsweise der zweiten Leitung mit einem Mittenpotentialwert vergleichen, der zwischen dem hohen Potentialwert und dem niedrigen Potentialwert liegen, die bei fehlerfreier Leitung über die beiden Leitungen übertragen werden.

Der steuerbare Umschalter kann mit einem Multiplexer aufgebaut sein, der drei Eingänge aufweist, von denen jeder mit einem der drei Komparatorausgänge verbunden ist, der einen mit dem Datenausgang der Empfangsstelle verbundenen Multiplexerausgang und drei Umschaltsteuereingänge besitzt. Von letzteren ist einer mit dem Zählerausgang des ersten Zählers, ein zweiter mit dem Ausgang des dritten NOR-Gliedes und ein dritter mit dem Ausgang des UND-Gliedes verbunden.

Der Multiplexer und die dritte Logikschaltung der Leitungszustandsdetektorschaltung sind dabei derart aufgebaut und verschaltet, daß der mit dem Datenausgang der Empfangsstelle verbundene Multiplexerausgang mit dem Komparatorausgang des ersten Komparators, der die Potentialwerte beider Leitungen miteinander vergleicht, immer dann verbunden wird, wenn beide Leitungen fehlerfrei sind oder wenn solche Leitungsfehler vorliegen, bei welchen der Komparatorausgang des ersten Komparators noch Potentialwechsel liefert, aus welchen sich die übertragenen Daten ableiten lassen. Aufbau und Verschaltung von Multiplexer und dritter Logikschaltung sind außerdem derart gewählt, daß bei Leitungsfehlern, bei welchen am Ausgang des ersten Komparators keine Potentialwechsel und damit keine Logikwertwechsel mehr auftreten, der Datenausgang der Empfangsstelle mit dem Komparatorausgang des zweiten oder des dritten Komparators verbunden wird, je nachdem ob bei dem aufgetretenen Leitungsfehler am Komparatorausgang des zweiten oder des dritten Komparators noch Potentialwechsel und somit Logikwertwechsel erscheinen.

Die Erfindung sowie weitere Aufgabenaspekte und Vorteile der Erfindung werden nun anhand von Ausführungsformen näher erläutert. In den Zeichnungen zeigen:
- Fig. 1: ein Ausführungsbeispiel einer Empfangsstelle eines Datenverarbeitungssystems mit einem Decoder und einer erfindungsgemäßen Fehlerverarbeitungsschaltung und einem steuerbaren Umschalter;
- Fig. 2: eine Ausführungsform einer erfindungsgemäßen Fehlerverarbeitungsschaltung;
- Fig. 3: eine schematische Darstellung eines von der Fehlerverarbeitungsschaltung gesteuerten Umschalters; und
- Fig. 4: eine Tabelle zur Erläuterung der Betriebsweise.

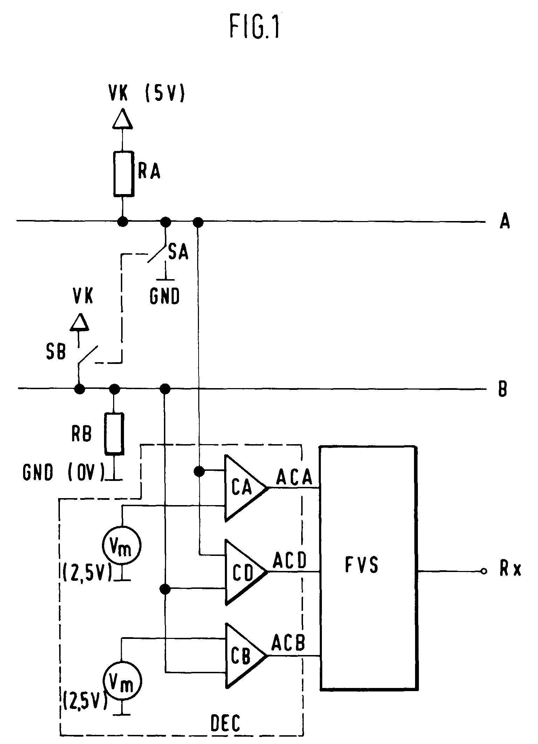

Die in Fig. 1 gezeigte Ausführungsform umfaßt einen Doppelleitungsbus mit zwei Leitungen A und B eines CAN-Systems. Dieses System umfaßt eine Mehrzahl, beispielsweise ca. 40, Netzknoten. In Fig. 1 sind Schaltungskomponenten nur eines einzigen Netzknotens dargestellt. Die weiteren Netzknoten sind mindestens zum Teil identisch aufgebaut.

Jeder Netzknoten ist sende- und empfangsfähig und bildet eine Sendestelle und eine Empfangsstelle.

Die erste Leitung A ist über einen ersten Widerstand RA mit einer netzknoteneigenen Betriebspotentialquelle VK (beispielsweise 5 V) verbunden, während die zweite Leitung über einen zweiten Widerstand RB mit einer Bezugspotentialquelle GND (beispielsweise 0 V) verbunden ist. Außerdem ist die erste Leitung A über einen ersten Schalter SA mit der Bezugspotentialquelle GND verbunden und ist die zweite Leitung B über einen zweiten Schalter SB mit der Bezugspotentialquelle VK verbunden. Die beiden Schalter werden mittels einer (nicht dargestellten) Sendesignalquelle beide gleichzeitig entweder in einen leitenden Zustand oder einen nichtleitenden Zustand gesteuert. Im nichtleitenden Zustand der beiden Schalter SA und SB liegt auf Leitung A das Betriebspotential VK, beispielsweise 5 V, und an der Leitung B das Bezugspotential, beispielsweise 0 V. Diesem Schalter- und Potentialzustand sind der Begriff "rezessiv" und der Logikwert 1" zugeordnet. Bei leitend gesteuerten Schaltern SA und SB liegt die erste Leitung A auf dem Bezugspotential (0 V) und die zweite Leitung B auf dem Betriebspotential (5 V). Diesem Schalter- und Potentialzustand sind der Begriff "dominant" und der Logikwert "0" zugeordnet. Bei einem Logikwertwechsel des über den Doppelleitungsbus übertragenen binären Nachrichtensignals findet somit auf den beiden Leitungen je ein Potentialwechsel von 5 V nach 0 V bzw. von 0 V nach 5 V statt. Auf Grund der synchronen Steuerung beider Schalter SA und SB werden auf beiden Leitungen A und B Nachrichtenimpulse zeitlagenmäßig gleichlaufend jedoch amplitudenmäßig gegenläufig übertragen.

Die Potentiale auf den beiden Leitungen A und B werden durch die Schaltzustände der beiden Schalter SA und SB sämtlicher beteiligter Netzknoten bestimmt. Der nichtleitende Schalterzustand der beiden Schalter SA und SB eines oder mehrerer Netzknoten kann durch die leitende Schalterstellung der beiden Schalter SA und SB eines oder mehrerer anderer Netzknoten überspielt werden. Aus diesem Grund wird der nichtleitende Zustand der beiden Schalter SA und SB eines Netzknotens als rezessiv und deren leitender Schalterzustand als dominant bezeichnet.

Der Empfangsteil des jeweiligen Netzknotens umfaßt einen Decoder DEC mit drei Komparatoren CA, CB und CD.

Mit einem ersten Komparator CD wird die Differenz zwischen dem Potential auf der Leitung A und dem Potential auf der Leitung B gebildet. Weist Leitung A ein höheres Potential als Leitung B auf, erscheint am Ausgang des Komparators CD der Logikwert "1", ansonsten der Logikwert "0". Einem rezessiven Zustand oder Logikwert "1" auf dem Doppelleitungsbus ist somit ein Logikwert "1" am Ausgang des Komparators CD zugeordnet, während bei einem dominanten Zustand oder Logikwert "0" auf dem Doppelleitungsbus am Ausgang des Komparators CD ein Logikwert "0" erscheint. Der Komparator CD dient daher als Dekodierer für die Nachricht, die in Form der beschriebenen Potentiale über den Doppelleitungsbus übertragen wird.

Ein zweiter Komparator CA vergleicht das jeweilige Potential der Leitung A mit einem Mittenpotential in Höhe von beispielsweise etwa 2,5 V, das zwischen dem hohen Potentialwert von 5 V und dem niedrigen Potentialwert von 0 V liegt. Ein dritter Komparator CB vergleicht das Potential der Leitung B mit einem Mittenpotential, das beispielsweise ebenfalls etwa 2,5 V beträgt.

Finden auf der Leitung A Potentialwechsel statt, führen diese zu entsprechend wechselnden Logikwertänderungen zwischen "1" und "0" am Ausgang des Komparators CA. Bleibt das Potential der Leitung A aufgrund eines Leitungsfehlers permanent auf hohem Potentialwert (5 V), erscheint am Ausgang des Komparators CA permanent ein Logikwert "1". Bleibt der Potentialwert der Leitung A aufgrund eines Leitungsfehlers permanent auf niedrigem Potentialwert von 0 V, erscheint am Ausgang des Komparators CA permanent der Logikwert "0".

Am Ausgang des Komparators CB erscheinen Wechsel zwischen den Logikwerten "1" und "0", wenn beide Leitungen fehlerfrei sind, während bei einem Leitung B betreffenden Leitungsfehler je nachdem, ob das Potential der Leitung B permanent auf hohem Potentialwert 5 V oder auf niedrigem Potentialwert 0 V bleibt, permanent ein Logikwert "0" bzw. "1" erscheint.

Jeder Netzknoten weist eine eigene Betriebsspannungsquelle auf, welche aus der dem gesamten Datenübertragungssystem gemeinsamen Versorgungsspannungsquelle, beispielsweise einer Kraftfahrzeugbatterie, als geregelte Spannung gewonnen wird. Der Versorgungsspannungsquelle ist eine Systemmasse, im Fall eines Kraftfahrzeugs in Form von Karosserieblech, zugeordnet. Bei praktischen Ausführungsformen ist das Bezugspotential GND der netzknoteneigenen Betriebsspannungsquelle üblicherweise gleich dem Systemmassepotential, nämlich 0 V. Betrachtet man ein fahrzeugeigenes CAN-Netz, werden die beiden Leitungen A und B des Doppelleitungsbus üblicherweise an Karosserieteilen entlanggeführt. Es kann dabei passieren, daß ein Kurzschluß der Leitung A und/oder der Leitung B nach Systemmasse hin entsteht, beispielsweise infolge von Durchscheuem der Isolierung der betroffenen Leitung.

Es können aber auch Leitungsfehler in Form von Kurzschlüssen zum Betriebspotential hin auftreten.

Nach dem bereits erwähnten Protokoll, wie es beispielsweise für CAN-Netze gilt, werden gesendete Nachrichten in Form von Impulsfolgen oder Datenrahmen übertragen, die einen vorgeschriebenen zeitlichen Mindestabstand voneinander haben und innerhalb welcher nicht mehr als eine vorgeschriebene Anzahl von Bits, nämlich 11 Bits, gleichen Logikwertes aufeinanderfolgen dürfen.

Läßt man Leitungsfehler außer Betracht, bei denen ein Leitungskurzschluß zur Versorgungsspannung des Gesamtsystems hin vorliegt, im Fall eines CAN-Systems für ein Kraftfahrzeug also zur Batteriespannung hin, sind die folgenden Leitungszustände möglich:
- I:: Fehlerfreier Leitungszustand
- II:: Kurzschluß der Leitung A mit der netzknoteneigenen Betriebsspannung (5 V)
- III:: Kurzschluß der Leitung A mit Masse (0 V)
- IV:: Kurzschluß der Leitung B mit der netzknoteneigenen Betriebsspannung (5 V)
- V:: Kurzschluß der Leitung B mit Masse (0 V)
- VI:: Kurzschluß der Leitungen A und B miteinander

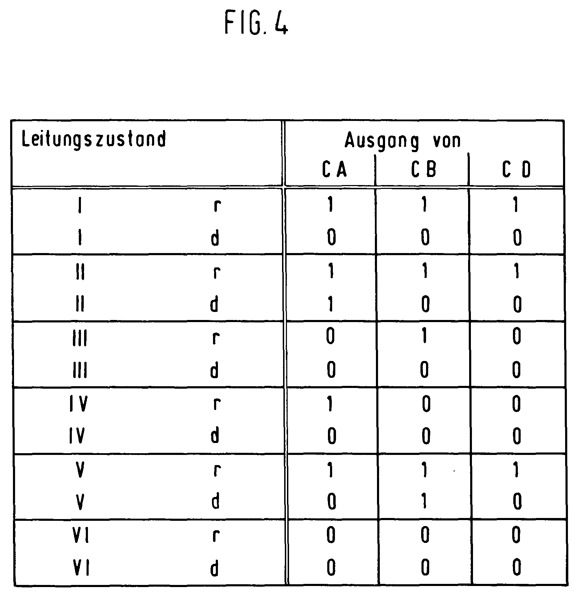

In diesen sechs verschiedenen Leitungszuständen ergeben sich für rezessive Bits mit dem Logikwert "1" und für dominante Bits mit dem Logikwert "0" an den Ausgängen der drei Komparatoren CA. CB und CD Logikwertmuster, wie sie in Fig. 4 dargestellt sind. Daraus ist folgendes ersichtlich:

Im fehlerfreien Leitungszustand liefert jeder der drei Komparatoren CA. CB und CD an seinem Ausgang Potentialwechsel zwischen "1" und "0" bei einem Wechsel zwischen rezessiv (in der Tabelle mit r abgekürzt) und dominant (in der Tabelle mit d abgekürzt) auf den beiden Leitungen. Bei den Fehlerzuständen II und V liefern die Komparatorausgänge sowohl des Komparators CD als auch des Komparators CB bzw. des Komparators CA Logikwertwechsel bei einem Wechsel zwischen r und d. Beim Auftreten der Fehler III und IV liefert nur noch der Ausgang des Komparators CB bzw. des Komparators CA einen Logikwertwechsel bei einem Wechsel zwischen r und d, während die Komparatoren CD und CA bzw. CD und CB keine Logikwertwechsel mehr zeigen. Im Fall des Leitungsfehlers VI tritt an dem Ausgang keines der drei Komparatoren ein Logikwertwechsel bei einem Wechsel zwischen r und d auf.

Diese Logikwertmuster in der Tabelle der Fig. 4 bedeuten:
Bei fehlerfreiem Leitungszustand I und beim Auftreten der Leitungsfehler II und V kann der Komparator CD für die Decodierung der empfangenen Datenbits verwendet werden, da in allen diesen drei Fällen mit Wechseln zwischen r und d Logikwertwechsel am Ausgang von CD einhergehen. In den Fehlerfällen II und V braucht also keine Umstellung gegenüber dem leitungsfehlerfreien Fall I vorgenommen zu werden.

Anders ist dies beim Auftreten der Leitungsfehler III und IV. In diesen beiden Fehlerfällen finden am Ausgang des Komparators CD keine Logikwertwechsel mehr statt sondern bleibt dessen Ausgang permanent auf einem dem dominanten Zustand entsprechenden Logikwert "0". Der Ausgang von CD kann also nicht mehr zur Datendecodierung herangezogen werden. Wie die Tabelle in Fig. 4 zeigt, finden aber in beiden Fällen noch am Ausgang eines der beiden Komparatoren CA und CB Logikwertwechsel statt, so daß im Fehlerfall III das Ausgangssignal von CB und im Fehlerfall IV das Ausgangssignal von CA zur einwandfreien Datendecodierung genutzt werden kann.

Aus dieser Erkenntnis ist die erfindungsgemäße Lehre entstanden, in allen Fällen, auch Leitungsfehlerfällen, dann für die Datendecodierung auf das Ausgangssignal des Komparators CD zurückzugreifen, wenn dieser bei Wechseln zwischen r und d Logikwertwechsel zwischen "1" und "0" zeigt. Bei Leitungsfehlern, bei welchen dies nicht der Fall ist, wird gemäß dieser Lehre zur Datendecodierung auf das Ausgangssignal desjenigen der beiden anderen Komparatoren CA und CB zurückgegriffen, der bei Wechseln zwischen r und d noch Logikwertwechsel zwischen "1" und "0" liefert. Das heißt, daß im fehlerfreien Fall I und beim Vorliegen von Leitungsfehlern II und V die Datendecodierung auf der Grundlage des Ausgangssignals des Komparators CD erfolgt, im Fall des Leitungsfehlers III unter Auswertung des Ausgangssignals des Komparators CB und im Fehlerfall IV unter Auswertung des Ausgangssignals des Komparators CA.

Im Fehlerfall VI führt auch diese Lehre nicht zur Ermöglichung einer Datendecodierung. Eine Datendecodierung ist zwar auch im Fehlerfall VI ermöglichbar, jedoch mit Maßnahmen, mit denen sich die vorliegende Erfindung nicht beschäftigt.

Logikwertmuster an den Ausgängen der Komparatoren CA, CB und CD, wie sie in der Tabelle in Fig. 4 im Zusammenhang mit den Leitungsfehlern II bis V dargestellt sind, treten auch bei fehlerfreien Leitungen auf, wenn über mehrere aufeinanderfolgende Datenbits kein Wechsel zwischen r und d auftritt, weil Datenbits gleichen Binärwertes aufeinanderfolgen. Als auf einen Leitungsfehler hinweisend sind derartige Logikwertmuster an den Ausgängen von CA, CB und CD aber nur dann zu bewerten, wenn der Zustand, daß am Ausgang eines oder zweier der drei Komparatoren ein Logikwertwechsel nicht stattfindet, länger andauert, als es nach dem Protokoll des jeweiligen Datenübertragungssystems zulässig ist. Betrachtet man beispielsweise in im Kfz-Bereich verwendetes CAN-System, bei welchem innerhalb einer Impulsfolge oder eines Datenrahmens nicht mehr als 11 gleichartige Datenbits aufeinanderfolgend dürfen, sollte von einem Leitungsfehler erst dann ausgegangen werden, wenn an dem Ausgang mindestens eines der drei Komparatoren CA, CB und CD ein Potentialwechsel für eine solche Zeitdauer nicht mehr stattgefunden hat, welche der Zeitdauer von mehr als 11 Datenbits entspricht. Wie groß diese Zeitdauer ist, hängt von der Bitrate ab, mit welcher die Datenübertragung erfolgt, die zu einer bestimmten Zeitdauer pro Datenbit führt. 11 Datenbits benötigen beispielsweise bei einer Bitrate von 10 kHz eine Zeitdauer von 1,1 ms und im Fall einer Bitrate von 100 kHz eine Zeitdauer von 110 µs. Im Fall eines CAN-Protokolls und dieser beiden Bitraten darf man bei Logikwertmustern an den Ausgängen von CA, CB und CD, die den Fällen II bis V entsprechen, somit erst dann von einem Leitungsfehler ausgehen, wenn an dem Ausgang mindestens eines Komparators ein Logikwertwechsel für eine längere Zeitdauer als 1,1 ms bzw. 110 µs nicht mehr stattgefunden hat.

In Fig. 1 sind Ausgänge ACA, ACD und ACB der Komparatoren CA, CD bzw. CB mit Eingängen einer Fehlerverarbeitungsschaltung FVS verbunden, deren Ausgang einen Datenausgang Rx der betrachteten Empfangsstelle bildet.

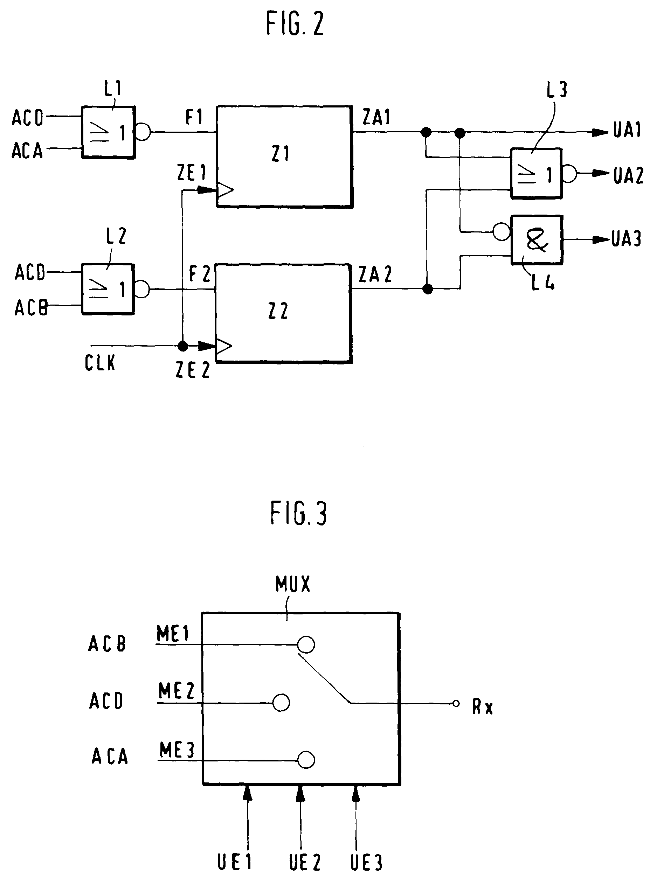

Zur Fehlerverarbeitungsschaltung FVS gehören eine Leitungszustandsdetektorschaltung, welche die in Fig. 2 gezeigte Ausführungsform haben kann, und ein Umschalter in Form eines Multiplexers MUX, der von der Leitungszustandsdetektorschaltung gesteuert wird, schematisch in Fig. 3 dargestellt ist und einen Ausgang aufweist, welcher den Datenausgang Rx der betrachteten Empfangsstelle bildet.

Die in Fig. 2 in Blockschaltbildform dargestellte Ausführungsform einer Leitungszustandsdetektorschaltung weist eingangsseitig eine erste Logikschaltung L1 in Form eines ersten NOR-Gliedes und eine zweite Logikschaltung L2 in Form eines zweiten NOR-Gliedes auf. Beide NOR-Glieder weisen je zwei Eingangsanschlüsse und einen Ausgangsanschiuß auf. Ein erster Eingangsanschluß eines jeden dieser beiden NOR-Glieder ist mit dem Ausgang ACD des Komparators CD verbunden, während der zweite Eingang des ersten NOR-Gliedes mit dem Ausgang ACA des Komparators CA und der zweite Ausgang des zweiten NOR-Gliedes mit dem Ausgang ACB des Komparators CB verbunden ist. Die Leitungszustandsdetektorschaltung weist außerdem zwei je als Zeitmeßeinrichtung dienende Zähler Z1 und Z2 mit je einem Zähltakteingang ZE1 bzw. ZE2, einem Zählfreigabe-/Rücksetzeingang F1 bzw. F2 und einem Zählerausgang ZA1 bzw. ZA2 auf. Bei einer praktischen Ausführungsform der Leitungszustandsdetektorschaltung werden die beiden Zähler je durch einen Logikwert "1" am Zählfreigabe-/Rücksetzeingang zum Zählen von Zähltaktimpulsen freigegeben und durch einen Logikwert "0" an dem Zählfreigabe-/Rücksetzeingang F1 bzw. F2 in einen Anfangszustand, vorzugsweise Zählstand "0", rückgesetzt. Wenn einer der beiden Zähler Z1, Z2 einen vorbestimmten Zählstand erreicht hat, gibt er an seinem Zählerausgang ZA1 bzw. ZA2 einen Logikwert "1" ab, im rückgesetzten Zustand und vor dem Erreichen dieses Zählwertes dagegen einen Logikwert "0". Die Frequenz der den beiden Zähltakteingängen ZE1 und ZE2 von einer (nicht dargestellten) Taktimpulsquelle zugeführten Taktimpulse CLK ist so gewählt, daß am entsprechenden Zählerausgang ZA1 bzw. ZA2 ein Logikwert "1", nur dann erscheint, wenn ab dem Auftreten des Logikwertes "1" am Zählfreigabe-/Rücksetzeingang F1 bzw. F2 eine Zeitdauer vergangen ist, die größer ist als die Zeitdauer von 11 Datenbits. Auf diese Weise wird das Auftreten eines Logikwertes "1" am Zählfreigabe-/Rücksetzeingang F1 bzw. F2 hinsichtlich seines Durchschlagens auf den entsprechenden Zählerausgang ZA1 bzw. ZA2 zeitlich für eine Dauer maskiert oder unterbunden, die der Zeitdauer von 11 Datenbits entspricht. Ein Logikwertzustand "1" am Zählfreigabe-/Rücksetzeingang F1 bzw. F2 wird somit am Zählerausgang ZA1 bzw. ZA2 nur dann wirksam, wenn er länger dauert als vom CAN-Protokoll zugelassen.

Die Ausgangssignale an den Zählerausgängen ZA1 und ZA2 werden mittels einer dritten Logikschaltung verknüpft, welche ein drittes NOR-Glied L3 und ein UND-Glied 14 umfaßt, wobei das UND-Glied einen invertierenden und einen nicht-invertierenden Eingang aufweist. Ein erster und ein zweiter Eingang des dritten NOR-Gliedes ist mit dem Zählerausgang ZA1 bzw. dem Zählerausgang ZA2 verbunden. Der invertierende Eingang des UND-Gliedes ist mit dem Zählerausgang ZA1 verbunden, während dessen nicht-invertierender Eingang mit dem Zählerausgang ZA2 verbunden ist.

Der Zählerausgang ZA1 bildet einen ersten Umschaltsteuersignalausgang UA1, der Ausgang des dritten NOR-Gliedes L3 bildet einen zweiten Umschaltsteuersignalausgang UA2 und der Ausgang des UND-Gliedes L4 bildet einen dritten Umschaltsteuersignalausgang UA3 der Leitungszustandsdetektorschaltung.

Der in Fig. 3 gezeigte Multiplexer weist drei Multiplexereingänge ME1, ME2 und ME3 auf, die mit den Ausgängen ACB, ACD bzw. ACA der drei Komparatoren CB, CD bzw. CA verbunden sind. Außerdem besitzt der Multiplexer MUX drei Umschaltsteuereingänge UE1, UE2 und UE3, die mit den Umschaltsteuersignalausgängen UA1, UA2 bzw. UA3 der Leitungszustandsdetektorschaltung verbunden sind.

Die Leitungszustandsdetektorschaltung ist derart konzipiert, daß bei jedem Leitungszustand nur einer der drei Umschaltsteuersignalausgänge UA1 bis UA3 einen Logikwert "1" aufweist, die anderen beiden Umschaltsteuersignaleingänge dagegen den Logikwert "0". Folglich ist der Datenausgang Rx der betrachteten Empfangsstelle in jedem Leitungszustand in definierter Weise mit einem bestimmten der Ausgänge ACB, ACD und ACA der drei Komparatoren CB, CD bzw. CA verbunden.

Im fehlerfreien Leitungszustand I bleiben die Zählerausgänge ZA1 und ZA2 auch nach einer Zählfreigabe der beiden Zähler Z1 und Z2 auf einem ausgangsseitigen Logikwert "0", der zu einem Logikwert "1" am Umschaltsteuersignalausgang UA2 führt. Bei den Leitungszuständen II und V erscheint ebenfalls am zweiten Umschaltsteuersignalausgang UA2 ein Logikwert "1". Im fehlerfreien Leitungszustand I und in den Fehlerzuständen II und V ist somit der Datenausgang Rx mit dem Ausgang ACD des ersten Komparators CD verbunden, wird also die Datendecodierung auf das Ausgangssignal des die Potentialwerte der beiden Leitungen A und B vergleichenden Komparators CD gestützt. Im Fall des Leitungsfehlers III erscheint ein Logikwert "1" am ersten Umschaltsteuersignalausgang UA1, so daß der Datenausgang Rx vom Multiplexer MUX mit dem Ausgang ACB des Komparators CB verbunden und die Datendecodierung auf das Ausgangssignal des die Potentialwechsel der Leitung B überwachenden Komparators CB gestützt wird. Im Fall des Leitungsfehlers IV erscheint der Logikwert "1" am dritten Umschaltsteuersignalausgang UA3, so daß der Datenausgang Rx vom Multiplexer MUX mit dem Ausgang ACA des Komparators CA verbunden und die Datendecodierung auf das Ausgangssignal des die Leitung A auf Potentialwechsel überwachenden Komparators CA gestützt wird.

Folglich wird in allen Leitungszuständen I bis V eine Leitungszustands- bzw. Fehlerverarbeitung durchgeführt, die zur Durchschaltung des Datenausgangs Rx auf den Ausgang eines solchen Komparators steuert, dessen Ausgangssignal bei dem existierenden Leitungszustand eine sichere Decodierung der empfangenen Datenbits ermöglicht.

Im Gegensatz zu der bekannten Fehlerverarbeitungsschaltung kann es also bei der erfindungsgemäßen Fehlerverarbeitungsschaltung nicht dazu kommen, daß bei einem der Leitungsfehler II bis V die Datendecodierung auf das Ausgangssignal eines Komparators gestützt wird, das eine Datendecodierung nicht ermöglicht, weil die mit diesem Komparator überwachte Leitung aufgrund des Leitungsfehlers keine Potentialwechsel aufweist.

## Patentansprüche

1. Fehlerverarbeitungsschaltung für eine Empfangsstelle eines Systems zur Übertragung binärer Daten in Form von Impulsfolgen, wobei:
a. das System eine Anzahl Empfangsstellen aufweist, die über einen Doppelleitungsbus mit einer ersten Leitung (A) und einer zweiten Leitung (B) verbunden sind;
b. ein erster Logikwert der binären Daten durch einen hohen Potentialwert auf der ersten Leitung (A) und einen niedrigen Potentialwert auf der zweiten Leitung (B) und ein zweiter Logikwert der binären Daten durch einen niedrigen Potentialwert auf der ersten Leitung (A) und einen hohen Potentialwert auf der zweiten Leitung (B) dargestellt wird;
c. innerhalb einer jeden Impulsfolge nicht mehr als eine vorbestimmte Anzahl gleichartiger Datenbits aufeinanderfolgen dürfen; und
d. die Empfangsstelle aufweist:
d.1 einen Datenausgang (Rx),
d.2 einen Dekoder (CA, CB, CD) mit drei Dekoderausgängen (ACA, ACB, ACD) von denen
d.2.1 ein beiden Leitungen (A, B) zugeordneter erster Dekoderausgang ein von der Differenz zwischen den Potentialwerten beider Leitungen (A, B) abhängendes erstes Dekoderausgangssignal liefert,
d.2.2 ein der ersten Leitung (A) zugeordneter zweiter Dekoderausgang ein von der Differenz zwischen dem Potentialwert der ersten Leitung (A) und einem ersten Mittenpotentialwert abhängendes zweites Dekoderausgangssignal liefert
d.2.3 und ein der zweiten Leitung (B) zugeordneter dritter Dekoderausgang ein von der Differenz zwischen dem Potentialwert der zweiten Leitung (B) und einem zweiten Mittenpotentialwert abhängendes drittes Dekoderausgangssignal liefen, wobei
d.2.4 der erste Mittenpotentialwert und der zweite Mittenpotentialwert je zwischen dem hohen Potentialwert und dem niedrigen Potentialwert liegen
d.2.5 und im fehlerfreien Fall (I) und beim Auftreten von Leitungsfehlern einer ersten Fehlergruppe (II, V) mit einem Leitungsfehler auf einer der beiden Leitungen (A, B) mindestens der erste Dekoderausgang (ACD) und beim Auftreten einer zweiten Fehlergruppe (III, IV) mit einem Leitungsfehler auf einer der beiden Leitungen (A, B) nur noch der der fehlerfreien anderen Leitung (A, B) zugeordnete Dekoderausgang (ACA, ACB) einwandfrei dekodierte Daten liefert;
d.3 eine Leitungszustandsdetektorschaltung (L1-L4, Z1, Z2), mittels welcher in Abhängigkeit von den Dekoderausgangssignalen fehlerfreie Leitungszustände und Leitungsfehler der ersten Leitung (A) und Leitungsfehler der zweiten Leitung (B) detektierbar und vom jeweiligen Detektionsergebnis abhängende Umschaltsteuersignale lieferbar sind; und
d.4 einen steuerbaren Umschalter (MUX), mittels welchem der Datenausgang (Rx) bei der Detektion von Leitungszuständen, bei welchen nur der zweite (ACA) oder der dritte (ACB) Dekoderausgang einwandfrei dekodierte Daten liefen, mit diesem Dekoderausgang (ACA, ACB) und ansonsten mit dem ersten Dekoderausgang (ACD) verbunden wird.

2. Fehlerverarbeitungsschaltung nach Anspruch 1, bei welcher die Leitungszustandsdetektorschaltung (L1-L4, Z1, Z2) aufweist:
a. eine das erste Dekoderausgangssignal und das zweite Dekoderausgangssignal verknüpfende, ein erstes Logiksignal liefernde erste Logikschaltung (L1);
b. eine das erste Dekoderausgangssignal und das dritte Dekoderausgangssignal verknüpfende, ein zweites Loggiksignal liefernde zweite Logikschaltung (L2);
c. eine das erste Logiksignal messende erste Zeitmeßeinrichtung (Z1) und eine das zweite Logiksignal messende zweite Zeitmeßeinrichtung (Z2), mittels welchen eine zeitliche Messung von Logiksignalwerten des ersten bzw. zweiten Logiksignals, die einen Leitungsfehler bedeuten können, durchgeführt und ein erstes bzw. zweites Leitungsfehlersignal dann erzeugt wird, wenn ein solcher Logiksignalwert länger als eine der vorbestimmten Anzahl gleicher Datenbits entsprechende Zeitdauer ab seinem Auftreten andauert; und
d. eine die beiden Leitungsfehlersignale verknüpfende dritte Logikschaltung (L3, L4), welche die beiden Leitungsfehlersignale zu dem Umschaltsteuersignal verknüpft.

3. Fehlerverarbeitungsschaltung nach Anspruch 2, bei welcher die erste (L1) und die zweite (L2) Logikschaltung je mit einem NOR-Glied mit einem ersten Eingang, einem zweiten Eingang und einem Ausgang aufgebaut sind und deren erste Eingänge je mit dem ersten Dekoderausgang (ACD) und deren zweite Eingänge mit dem zweiten (ACA) bzw. dritten (ACB) Dekoderausgang verbunden sind.

4. Fehlerverarbeitungsschaltung nach Anspruch 3, bei welcher die erste (Z1) und die zweite (Z2) Zeitmeßeinrichtung je mit einem Zähler mit einem Zählfreigabe/Rücksetzeingang (F1, F2), einem Zähltakteingang (ZE1, ZE2) und einem Zählerausgang (ZA1, ZA2) aufgebaut sind und deren Zählfreigabe/Rücksetzeingänge (F1, F2)mit dem Ausgang der ersten (L1) bzw. zweiten (L2) Logikschaltung, deren Taktsignaleingänge (ZE1, ZE2) je mit einer Zähltaktimpulsquelle (CLK) und deren Zählerausgänge (ZA1, ZA2) mit einem ersten bzw. zweiten Eingang der dritten Logigschaltung (L3) verbunden sind.

5. Fehlerverarbeitungsschaltung nach Anspruch 4, bei welcher
a. die dritte Logikschaltung (L3, L4) mit einem dritten NOR-Glied (L3), das einen ersten Eingang, einen zweiten Eingang und einen Ausgang aufweist, und mit einem UND-Glied (L4), das einen invertierenden Eingang, einen nichtinvertierenden Eingang und einen Ausgang aufweist, aufgebaut ist,
b. der erste Eingang des dritten NOR-Gliedes (L3) und der invertierende Eingang des UND-Gliedes (L4) mit dem Zählerausgang (ZA1) des ersten Zählers (Z1) und der zweite Eingang des dritten NOR-Gliedes (L3) und der nichtinvertierende Eingang des UND-Gliedes (L4) mit dem Zählerausgang (ZA2) des zweiten Zählers (Z2) verbunden sind,
c. der Zählerausgang (ZA1) des ersten Zählers (Z1), der Ausgang des dritten NOR-Gliedes (L3) und der Ausgang des UND-Gliedes (L4) einen ersten (UA1), einen zweiten (UA2) bzw. einen dritten (UA3) Umschaltsteuersignalausgang bilden, an denen ein erstes, ein zweites bzw. ein drittes Umschaltsteuersignal abnehmbar ist.

6. Fehlerverarbeitungsschaltung nach Anspruch 5, bei welcher der steuerbare Umschalter (MUX) mit einem Multiplexer aufgebaut ist, der einen mit dem ersten Dekoderausgang (ACD) verbundenen ersten Multiplexereingang (ME1), einen mit dem zweiten Dekoderausgang (ACA) verbundenen zweiten Multiplexereingang (ME2) und einen mit dem dritten Dekoderausgang (ACB) verbundenen dritten Multiplexereingang (ME3), einen mit dem Datenausgang (Rx) verbundenen Multiplexerausgang und einen mit dem ersten Umschaltsteuersignalausgang (UA1) verbundenen ersten Umschaltsteuereingang (UE1), einen mit dem zweiten Umschaltsteuersignalausgang (UA2) verbundenen zweiten Umschaltsteuereingang (UE2) und einen mit dem dritten Umschaltsteuersignalausgang (UA3) verbundenen dritten Umschaltsteuereingang (UE3) aufweist, wobei der Datenausgang (Rx) in Abhängigkeit davon, ob ein als Umschaltsteuersignal zu wertender Potentialwert ("1") an dem ersten (UE1), dem zweiten (UE2) oder dem dritten (UE3) Umschaltsteuereingang auftritt, mit dem dritten (ACB), dem ersten (ACD) bzw. dem zweiten (ACA) Komparatorausgang verbindet.

7. Fehlerverarbeitungsschaltung nach einem der Ansprüche 1 bis 5, bei welcher
a. der Dekoder (CA, CB, CD) mit einem ersten Komparator (CD), einem zweiten Komparator (CA) und einem dritten Komparator (CB) aufgebaut ist,
b. die je einen ersten Komparatoreingang, einen zweiten Komparatoreingang und einen Komparatorausgang (ACA, ACB, ACD) aufweisen, wobei:
c. die beiden Komparatoreingänge des ersten Komparators (CD) mit je einer der beiden Leitungen (A, B), der erste Komparatoreingang des zweiten Komparators (CA) mit der ersten Leitung (A), der zweite Komparatoreingang des dritten Komparators (CB) mit der zweiten Leitung (B) und der zweite Komparatoreingang des zweiten Komparators (CA) und der erste Komparatoreingang des dritten Komparators (CB) je mit einer Referenzspannungsquelle (Vm), welche den je zugehörigen Mittenpotentialwert liefert, verbunden sind, und
d. der Komparatorausgang (ACD) des ersten Komparators (CD) den ersten Dekoderausgang, der Komparatorausgang (ACA) des zweiten Komparators (CA) den zweiten Dekoderausgang und der Komparatorausgang (ACB) des dritten Komparators (CB) den dritten Dekoderausgang bildet.

8. Datenübertragungssystem mit einem Doppelleitungsbus und einer Mehrzahl Sende-/Empfangsstellen, die je eine Fehlerverarbeitungsschaltung nach einem der Ansprüche 1 bis 7 aufweisen.

9. Datenübertraungssystem nach Anspruch 8, das als CAN-System und entsprechend dem CAN-Protokoll aufgebaut ist.
